# EUROPÄISCHE PATENTANMELDUNG

(11) **EP 4 173 879 A1**
(43) Veröffentlichungstag der Anmeldung: **03.05.2023**
(21) Anmeldenummer: 22203525.5
(22) Anmeldetag: 25.10.2022
(51) Int. Cl.: B60L 53/16, B60L 53/18, B60L 53/60

(54) **LADEKABEL UND VERFAHREN ZUM BETREIBEN DESSELBEN**

(30) Priorität: 28.10.2021 DE 102021128111
(71) Anmelder: reev plus GmbH, 80355 München (DE)
(72) Erfinder: SCHLUTIUS, Eduard, 80355 München (DE)
(74) Vertreter: Kuhnen & Wacker Patent- und Rechtsanwaltsbüro PartG mbB

(57) **Zusammenfassung**

Es wird ein elektrisches Ladekabel zum Verbinden zwischen einer elektrischen Ladestation und einem Elektrofahrzeug bereitgestellt. Das Ladekabel hat ein Steckverbinderpaar. Das Steckverbinderpaar ist über eine elektrisch leitende Kabelverbindung verbunden. Das Ladekabel ist ausgebildet, beim Ladevorgang, Strom von der Ladestation durch den einen Steckverbinder des Steckverbinderpaars über die Kabelverbindung zu dem anderen Steckverbinder des Steckverbinderpaars zu übertragen. Das Ladekabel ist ferner ausgebildet, den übertragenen Strom an das Elektrofahrzeug abzugeben. Die Kabelverbindung hat einen Zwischenschaltkasten. Der Zwischenschaltkasten enthält eine Messeinrichtung. Ferner enthält der Zwischenschaltkasten ein Elektronikmodul. Die Messeinrichtung ist ausgebildet, eine Strommenge zu messen. Die Strommenge entspricht dem beim Ladevorgang über die Kabelverbindung übertragenen Strom. Das Elektronikmodul ist ausgebildet, Daten gemäß der gemessenen Strommenge zu verarbeiten. Ferner ist das Elektronikmodul ausgebildet, die Daten gemäß der gemessenen Strommenge funktechnisch zu kommunizieren.

## Beschreibung

Die Erfindung betrifft ein Ladekabel mit den Merkmalen des Oberbegriffs des Anspruchs 1 sowie ein Verfahren zum Betreiben eines elektrischen Ladekabels.

Herkömmliche Ladestationen, die an Wänden fest montiert oder abnehmbar angebracht sind, sogenannte Wandladestationen, oder auch Wallboxen genannt, sind die gängige Praxis beim Laden von Elektrofahrzeugen, wie vollelektrisch oder hybrid elektrisch betriebene Fahrzeuge, worunter Personenkraftwagen, Lastkraftwagen, aber auch Motorräder oder Flugzeuge fallen.

Eine offline Wandladestation zum Laden von Elektrofahrzeugen dient primär dem Zweck, Benutzer, Fahrzeug und dazugehörige Gebäude elektrotechnisch zu schützen und eine Kommunikation zwischen dem Gebäude und/oder einem daran gekoppelten Stromnetz bzw. der Wandladestation und dem Elektrofahrzeug herzustellen. Bei einer solchen Wandladestation geschieht die Abrechnung des Stroms über den im Hausanschluss verbauten Stromzähler des Energieversorgers. Eine separate Dokumentation des vom Elektrofahrzeug geladenen Stroms ist technisch nicht möglich, da die Wandladestation keinen Stromzähler beinhaltet.

Eine online Wandladestation übernimmt weitere Aufgaben wie eine Identifikation mittels Radio-Frequency Identification (RFID) von Benutzern, aber auch eine Messung von Strom und die Kommunikation mit einem Server, basierend auf Cloud Software, über welche weitere Services bereitgestellt werden können. Bei einer solchen Wandladestation gibt es die Möglichkeit, den geladenen Strom separat zu dokumentieren. Im Falle eines Einfamilienhauses kann die Wandladestation (Schnittstellenkompatibilität vorausgesetzt) direkt in ein zentrales Verwaltungssystem einer Gruppe eingebunden werden und die Dokumentation von mehreren Benutzern dieser Gruppe vollautomatisiert übernommen werden. Im Falle eines Mehrfamilienhauses können Wandladestationen in der Regel nicht einfach in ein zentrales Verwaltungssystem der Gruppe eingebunden werden. Stattdessen sind diese in ein anderes dem Mehrfamilienhaus zugehöriges System eines externen von der Gruppe unabhängigen Betreibers eingebunden. Dieser Betreiber dokumentiert den Stromverbrauch und rechnet den von ihm bereitgestellten Strom gegenüber jedem Stellplatzmieter ab. Eine zusätzliche Anbindung an das zentrale Verwaltungssystem der Gruppe ist nicht möglich. Stattdessen wird ein Aufwand für Dokumentation und Abrechnung der Gruppe erhöht.

Der Erfindung liegt nun die Aufgabe zugrunde, eine einfachere und kostengünstigere Technik bereitzustellen, die ein oder mehrere Nachteile aus dem Stand der Technik löst.

An dieser Stelle sei vermerkt, dass Anmerkungen zum Stand der Technik lediglich dem Hintergrund der vorliegenden Offenbarung dienen und nicht zwangsläufig den Stand der Technik darstellen, sondern Teile der vorliegenden Offenbarung darstellen können.

### KURZFASSUNG

Erfindungsgemäß wird diese Aufgabe durch die Merkmale der unabhängigen Ansprüche gelöst.

Konkret wird die Aufgabe durch ein elektrisches Ladekabel zum Verbinden zwischen einer elektrischen Ladestation und einem Elektrofahrzeug gelöst. Das Ladekabel hat ein Steckverbinderpaar. Das Steckverbinderpaar ist über eine elektrisch leitende Kabelverbindung verbunden. Das Ladekabel ist ausgebildet, beim Ladevorgang, Strom von der Ladestation durch den einen Steckverbinder des Steckverbinderpaars über die Kabelverbindung zu dem anderen Steckverbinder des Steckverbinderpaars zu übertragen. Das Ladekabel ist ferner ausgebildet, den übertragenen Strom an das Elektrofahrzeug abzugeben. Die Kabelverbindung hat einen Zwischenschaltkasten, zum Beispiel fest integriert. Der Zwischenschaltkasten enthält eine Messeinrichtung. Ferner enthält der Zwischenschaltkasten ein Elektronikmodul. Die Messeinrichtung ist ausgebildet, eine Strommenge zu messen. Die Strommenge entspricht dem beim Ladevorgang über die Kabelverbindung übertragenen Strom. Das Elektronikmodul ist ausgebildet, Daten gemäß der gemessenen Strommenge zu verarbeiten. Ferner ist das Elektronikmodul ausgebildet, die Daten gemäß der gemessenen Strommenge funktechnisch zu kommunizieren.

Die Erfindung hat den Vorteil, dass eine größere Flexibilität und Einfachheit in der Dokumentation und Systembereitstellung erreicht werden kann. Dadurch lassen sich sowohl Kosten für Betreiber von Ladestationen als auch Kosten für Betreiber von Elektrofahrzeugflotten reduzieren.

Das Steckverbinderpaar kann genau zwei, vorzugsweise gleiche, Steckverbinder haben, die miteinander verbunden sind. Die elektrisch leitende Kabelverbindung kann die zwei Steckverbinder direkt und elektrisch miteinander verbinden. Die Steckverbinder können zum händischen Trennen und Verbinden des Ladekabels mit der Ladestation und dem Elektrofahrzeug vorgesehen sein. Bei Steckung können die Steckverbinder durch Formschluss passend ausgerichtet sein, durch Federkraft kraftschlüssig lösbar fixiert, zum Beispiel über einen Kontaktfuß oder durch Verschrauben zusätzlich gegen unbeabsichtigtes Lösen gesichert sein. Die Steckverbinder können Stecker sein, die jeweils komplementär zu Buchsen, Kupplungen oder Steckdosen sein.

Das Ladekabel kann ein tragbares Ladekabel sein. Das Ladekabel kann vollständig unabhängig und/oder selbständig von einer Ladestation und/oder einem Elektrofahrzeug sein. Bei der Verwendung des Ladekabels, kann das Ladekabel bzw. der Zwischenschaltkasten so ausgestaltet sein, dass eine Tragehilfe entfallen kann. Im Betrieb, vorzugsweise wenn eine Verbindung zwischen dem Elektrofahrzeug und der Ladestation hergestellt ist, kann der Zwischenschaltkasten so ausgestaltet sein, dass er auf dem Boden aufliegt oder in der Luft hängt. Eine durch die Schwerkraft verursachte Zugkraft auf das Ladekabel kann hierdurch verringert sein.

Das Ladekabel kann explizit für Wechselstrom- (AC) Laden ausgebildet sein. Hierbei können einphasiges, zweiphasiges oder dreiphasiges Laden durch das Ladekabel ermöglicht werden. Dies kann durch eine Bestromung jeweiliger Phasen des Ladekabels beim Betrieb vorgegeben sein.

Der Zwischenschaltkasten kann sich innerhalb einer Kabelstrecke des Ladekabels befinden. Es ist hierin also so zu verstehen, dass der Zwischenschaltkasten einen Teil der Kabelstrecke der Kabelverbindung als Verbindungsstrecke zwischen dem einen und dem anderen des Steckverbinderpaars bildet bzw. dort angeordnet ist. Durch den Zwischenschaltkasten können für das Laden verwendete Leiter verlaufen. Die für das Laden verwendeten Leiter können ein oder mehrere, insbesondere drei, Phasen, ein Neutralleiter, eine Proximity-Pilot- (PP) Leitung und/oder eine Control-Pilot- (CP) Leitung sein.

Zum Beispiel kann die Kabelverbindung im Wesentlichen drei Kabelabschnitte aufweisen. Ein erster Kabelabschnitt kann einen ersten Abschnitt der für das Laden verwendeten Leiter und eine erste Kabelisolation aufweisen. Die erste Kabelisolation kann eine isolierende Ummantelung für den ersten Abschnitt der für das Laden verwendeten Leiter sein. Die erste Kabelisolation kann die Leiter des ersten Abschnitts der für das Laden verwendeten Leiter vor Umwelteinflüssen schützen. Hierzu kann die erste Kabelisolation Polyvinylchlorid (PVC), Polyethylen (PE), Gummi, Polyurethan (PUR), Silikon, Polytetrafluorethylen (PTFE) oder einer Kombination daraus enthalten bzw. daraus bestehen.

Ein zweiter Kabelabschnitt kann dem Zwischenschaltkasten entsprechen. Der Zwischenschaltkasten kann somit als Teil der Kabelverbindung aufgefasst werden. Hierbei umgibt der Zwischenschaltkasten einen zweiten Abschnitt der für das Laden verwendeten Leiter. Hierbei kann eine extra Isolierung innerhalb des Zwischenschaltkastens im Sinne einer Kabelisolation entfallen. Die für das Laden verwendeten Leiter können eine eigene Isolierschicht aufweisen. Hierbei kann ein Teil der für das Laden verwendeten und durch die Messeinrichtung führenden Leiter im Bereich der Messeinrichtung freigelegt sein. Ein erster Übergang von dem ersten Kabelabschnitt zu dem zweiten Kabelabschnitt kann in Rohrtechnik ausgeführt sein. Hierzu können zum Beispiel Muffen verwendet werden. Beispiele für Muffen sind Stemmmuffen, Rastermuffen, Steckmuffen, Klebemuffen, Pressmuffen und Gewindemuffen.

Ein dritter Kabelabschnitt kann einen dritten Abschnitt der für das Laden verwendeten Leiter und eine zweite Kabelisolation aufweisen. Die erste Kabelisolation und die zweite Kabelisolation können gleich sein. Ein zweiter Übergang von dem zweiten Kabelabschnitt zu dem dritten Kabelabschnitt kann ebenfalls wie der erste Übergang in Rohrtechnik ausgeführt sein. Hierzu können der erste Übergang und der zweite Übergang gleich sein.

Vorteilhafte Ausführungsformen der Erfindung sind in den Unteransprüchen angegeben.

Beispielweise hat der Zwischenschaltkasten keine eigene Steuerfunktion, die den Strom bzw. Stromfluss zwischen dem Steckverbinderpaar beeinflusst. So kann der Ladevorgang unabhängig von einer Funktionalität des Zwischenschaltkastens bzw. von einer in dem Ladekabel/Zwischenschaltkasten vorhandenen Elektronik sein. Die für das Laden verwendeten Leiter können ununterbrochen sein, zum Beispiel ungehindert (z. B. ohne Schalterelement). So können die ein oder mehreren, vorzugsweise drei, Phasen, und/oder der Neutralleiter ununterbrochen durch den Zwischenschaltkasten verlaufen. Dies gilt betriebsunabhängig, also vorzugsweise unabhängig davon, ob das Ladekabel eine Verbindung mit der Ladestation und/oder dem Elektrofahrzeug aufweist. So kann beim Steckbetrieb, also bei der direkten (elektrischen Verbindung) zwischen der Ladestation und dem Elektrofahrzeug mittels des Ladekabels, instantan (z. B. ohne Zutun des Ladekabels oder des Zwischenschaltkastens) geladen werden.

Somit kann eine dem Ladevorgang passiv gegenüberstehende Funktionalität bereitgestellt werden. Eine komplexe Installation kann somit entfallen.

Beispielsweise ist der Zwischenschaltkasten kein reiner mobiler digitaler Stromzähler. Der Zwischenschaltkasten kann aber ohne Anzeige bzw. Anzeigenelektronik auskommen. Zum Beispiel hat das Ladekabel bzw. der Zwischenschaltkasten keine grafische Benutzerschnittstelle. Ebenso kann das Ladekabel bzw. der Zwischenschaltkasten keine Eingabeschnittstelle aufweisen, mit der ein Nutzer vorzugsweise händisch Einstellungen an dem Ladekabel oder dem Zwischenschaltkasten tätigen kann. So kann Strom und Komplexität reduziert werden, und gleichzeitig ein unauffälliges Accessoire in Form des Zwischenschaltkasten bereitgestellt werden.

Die Daten können einen über eine Zeitdauer des Ladevorgangs akkumulierten Stromverbrauch anzeigen bzw. enthalten. So kann am Ende des Ladevorgangs ein Gesamtstromverbrauch durch das Elektronikmodul übermittelt werden.

Hierdurch kann ein Kommunikationsaufwand gering gehalten werden.

Die Daten können ferner einen mit der Strommenge assoziierten Zeitstempel enthalten. So kann Datum und/oder Uhrzeit mit der gemessenen Strommenge verknüpft werden. Hierdurch können Aussagen über Validität der Daten und Batteriegesundheit des Elektrofahrzeugs getroffen werden.

Das Elektronikmodul kann ausgebildet sein, mit einer in einer Umgebung des Zwischenschaltkastens befindlichen Benutzerausrüstung (UE) funktechnisch zu kommunizieren. Die funktechnische Kommunikation zwischen Elektronikmodul und UE kann über eine Funktechnologie mit kurzer Reichweite geschehen. Zum Beispiel können drahtlose Netzwerke für den Nahbereich für physikalisch stark begrenzte Reichweiten eingesetzt werden. Hierunter fallen zum Beispiel Wireless Local Area Network (WLAN), Bluetooth, Nahfeldkommunikation (NFC) oder ZigBee. Das Elektronikmodul kann ferner ausgebildet sein, als Antwort auf eine Anforderung durch die UE, die Daten gemäß der gemessenen Strommenge an die UE funktechnisch zu kommunizieren.

Auf einfache Art und Weise kann somit eine Dokumentation basierend auf den Daten, die von der UE an ein zentrales Verwaltungssystem einer dedizierten Gruppe gesendet werden können, bereitgestellt werden. Hierbei kann das UE bzw. dessen Benutzer zu dieser dedizierten Gruppe gehören.

Das Elektronikmodul kann eine Prozessoreinheit, eine Speichereinheit und eine Sendeempfangseinheit aufweisen. Hierbei kann die Prozessoreinheit das Verarbeiten der Daten gemäß der durch die Messeinrichtung gemessenen Strommenge übernehmen und, als Host der Speichereinheit, Daten gemäß der gemessenen Strommenge in die Speichereinheit speichern. Alternativ oder zusätzlich kann das Elektronikmodul einen separaten Host aufweisen, der zwischen der Prozessoreinheit und der Speichereinheit geschaltet ist. Hierbei kann der Host die verarbeiteten Daten gemäß der gemessenen Strommenge von der Prozessoreinheit abfragen oder diese von der Prozessoreinheit erhalten.

Die Prozessoreinheit kann im Falle der Anforderung durch die UE die in der Speichereinheit gespeicherten Daten gemäß der gemessenen Strommenge abrufen und an die Sendeempfangseinheit weiterleiten. Die Sendeempfangseinheit kann dazu ausgebildet sein, die Daten gemäß der gemessenen Strommenge an die UE funktechnisch zu kommunizieren.

Das Elektronikmodul kann ferner ausgebildet sein, die Daten gemäß der gemessenen Strommenge an die UE, abhängig von einer in dem Elektronikmodul gespeicherten und mit der UE assoziierten Kennung, zu kommunizieren. Die Kennung der UE kann explizit in der Speichereinheit gespeichert sein. Hierbei können die Kennungen sowohl dem Elektronikmodul als auch dem zentralen Verwaltungssystem bekannt sein.

Somit kann bei Übereinstimmen der Kennungen eine erfolgreiche Dokumentation durchgeführt werden. Eine Sicherheit kann sich dadurch erhöhen.

Das Elektronikmodul kann ferner dazu ausgebildet sein, in einem Erstauthentifizierungsverfahren bei Einrichtung des Ladekabels die mit der UE assoziierte Kennung zu speichern. Beim Erstauthentifizierungsverfahren kann das Elektronikmodul dazu eingerichtet werden, die Kommunikation der Daten über die Sendeempfangseinheit auszuschließen, wenn es sich um eine andere als die mit der UE assoziierten Kennung handelt. Es kann somit eine dedizierte Zuordnung zwischen dem Ladekabel und der UE bereitgestellt werden. Beispielsweise kann eine feste Zuordnung zwischen einem Paar aus Ladekabel und UE gebildet werden. So kann eine eindeutige Zuordnung von Ladekabel und UE erfolgen ohne weitere UEs zuzulassen. In einer Weiterbildung kann unter Verwendung des UEs, zum Beispiel mittels einer Freigabeerlaubnis durch das UE, eine weitere Zuordnung zwischen dem Ladekabel und einem anderen UE ermöglicht werden. Die Zuordnung kann beispielsweise am Ende der Ladekabelnutzung durch entsprechende Löschung der mit der UE assoziierten Kennung freigegeben werden kann. Das Elektronikmodul kann dabei formatiert bzw. auf einen Ausgangszustand zurückgesetzt werden, und das Erstauthentifizierungsverfahren erneut durchführen. Durch die dedizierte Zuordnung kann auch ein Missbrauch des Ladekabels verhindert werden. Die Kennung kann eine von einer Bluetooth-Kennung unterschiedliche und/oder unabhängige Kennung sein. In einem Beispiel kann die Kennung eine mit der UE assoziierte Identifikationsnummer sein, zum Beispiel einer Teilnehmer-Identitätsmodul (SIM)-Karte. Die Identifikationsnummer kann ein Integrated Circuit Card Identifier (ICCID) der Sim-Karte sein.

Der Zwischenschaltkasten kann eine vor Umwelteinflüssen geschützte Einhausung oder Umhausung sein. Die Einhausung bzw. Umhausung kann aus Kunststoff hergestellt sein. Der Kunststoff kann Thermoplast, Duroplast, Polyvinylchlorid (PVC), Polypropylen (PP), Polyethylen (PE), Polyurethan (PU/PUR) oder Polyethylenterephthalat (PET) sein. Die Einhausung bzw. Umhausung kann im Wesentlichen zwei Formteile umfassen, die beim Zusammenführen den zweiten Abschnitt der für das Laden verwendeten Leiter des Ladekabels umgeben. Die zwei Formteile können komplementär zueinander sein, um sie mit entsprechenden Befestigungsmitteln lösbar oder fest zu verbinden. Zum Beispiel können entsprechende für die Befestigungsmittel vorgesehene gemeinsame Befestigungspunkte beider Formteile jeweils nur von einer der Formteile aus (einseitig) zugänglich sein. Beim Zusammenfügen der beiden Formteile können die gemeinsamen Befestigungspunkte ein für die Befestigungsmittel vorgesehenes Gewinde oder Loch ausbilden. So kann mit einem Befestigungsmittel, wie einer Schraube oder Niete, an entsprechenden gemeinsamen Befestigungspunkten eine lösbare oder feste Verbindung hergestellt werden. Das kann Material einsparen. Ferner kann der Zwischenschaltkasten das Elektronikmodul, vorzugsweise die Sendeempfangseinheit, die Speichereinheit und die Prozessoreinheit, und die Messeinrichtung einhausen.

Hierdurch ergibt sich ein effektiv vor Umwelteinflüssen geschütztes Ladekabel.

Das Elektronikmodul und die Messeinrichtung können elektrisch mittels einer festen oder lösbaren elektrischen Verbindung, vorzugsweise mittels eines Busses, verbunden sein, zum Beispiel eines einzelnen Busses. Die feste oder lösbare elektrische Verbindung kann ein Verbindungssystem zur Datenübertragung zwischen dem Elektronikmodul und der Messeinrichtung über einen gemeinsamen Übertragungsweg sein. Hierbei kann zum Beispiel ein serieller Bus verwendet werden. Bei dem seriellen Bus kann die zu übertragende gemessene Strommenge in Einheiten, z. B. eine Folge von einzelnen Bits, unterteilt sein. Diese Folge kann dann über, zum Beispiel nur, eine Signalleitung von der Messeinrichtung zu dem Elektronikmodul nacheinander gesendet werden. Die Messeinrichtung kann zusammen mit dem Elektronikmodul integriert sein, zum Beispiel Teil einer integrierten Schaltung sein oder diese bilden.

Eine Implementierung der elektrischen Verbindungen kann somit in dem Zwischenschaltkasten vereinfacht werden.

Die Messeinrichtung kann in einem Beispiel ein direktmessender Stromzähler sein. Zum Beispiel kann der Stromzähler ein Wechselstromzähler oder Drehstromzähler sein, die für Einphasen- und/oder Dreiphasenwechselstrom ausgelegt sind. So kann der direktmessende Stromzähler für eine Nennspannung von 230 V (entsprechend 400 V zwischen den Phasen, auch Außenleiter genannt) ausgelegt sein.

Hierin ist zwar ausschließlich die Rede von gemessenem Strom bzw. Strommenge, allerdings versteht es sich von selbst, dass der Stromzähler eine elektrische Stromstärke sowie die anliegende Wechselspannung erfassen und durch zeitliche Integration eine verbrauchte Wirkenergie, auch als Wirkverbrauch bezeichnet, bestimmen kann. Die Daten gemäß der gemessenen Strommenge können somit auch die verbrauchte Wirkenergie bzw. den Wirkverbrauch enthalten.

Der eine Steckverbinder des Steckverbinderpaars kann ein Typ-1-Stecker, Typ-2-Stecker oder Combo-Stecker sein. Der andere Steckverbinder des Steckverbinderpaars kann identisch zu dem einen Steckverbinder des Steckverbinderpaars sein. Alternativ kann der andere Steckverbinder des Steckverbinderpaars von dem einen Steckverbinder des Steckverbinderpaars verschieden sein, insbesondere in Art und Ausführung. So kann der andere Steckverbinder ein anderer aus einem Typ-1-Stecker, Typ-2-Stecker oder Combo-Stecker sein

Eine Lade-Art des Ladekabels kann Mode 2, Mode 3 oder Mode 4 entsprechen. Hierdurch kann angegeben sein, für welche Technologie das Ladekabel geeignet ist bzw. welche Technologie unterstützt wird, zum Beispiel im Sinne einer Ladetechnik, Verbindungstechnik und Kompatibilität.

Zum besseren Verständnis, kann das Ladekabel ein im Wesentlichen Mode 2, Mode 3 oder Mode 4 funktionsgleichendes Ladekabel sein, in dessen Verbindungszweig zwischen den Steckverbindern der Zwischenschaltkasten geschaltet ist. Hierbei können der eine Steckverbinder ein Typ-1-Stecker und der andere Steckverbinder ein Typ-2-Stecker sein.

Zum Beispiel bedeutet Mode 2, dass einer der Steckverbinder des Steckverbinderpaars des Ladekabels an eine Standard-Haushaltssteckdose angeschlossen werden kann. In diesem Beispiel wird die Kommunikation zwischen Elektrofahrzeug und Ladestation nicht durch das Elektronikmodul oder irgendein anderes in dem Zwischenschaltkasten befindliches Element ausgeführt oder beeinflusst, das zwischen dem Steckverbinderpaar geschaltet ist.

Beim Typ-1-Stecker kann es sich um einen einphasigen Stecker handeln, welcher eine Spannungs-/Stromaufnahme von etwa 230 V/ 32 A aufweist. Beim Typ-2-Stecker, einem dreiphasigen Stecker, kann eine Spannungs-/Stromaufnahme von 400 V/ 32 A bis zu 400 V/ 63 A betragen. Beim Combo-Stecker kann es sich um einen erweiterten Typ-2-Stecker handeln, der zwei zusätzliche Leitungskontakte aufweist, um eine Schnellladefunktion bereitzustellen. Im AC-Ladebetrieb kann der Combo-Stecker eine Spannungs-/Stromaufnahme von 400V/125A bis 400V/425A aufweisen.

Das Elektronikmodul kann als Leiterplatte ausgeführt sein, dessen Elemente teilweise gedruckt und teilweise bestückt getragen werden. Alternativ oder zusätzlich kann das Elektronikmodul und die Messeinrichtung zusammen auf einer Leiterplatte angeordnet/ausgebildet sein bzw. als Leiterplatte integriert sein. Das Elektronikmodul kann an eine CP-Leitung der Kabelverbindung angeschlossen sein. Das Elektronikmodul kann ausgebildet sein, die Daten gemäß der gemessenen Strommenge basierend auf einem über die CP-Leitung übertragenen Signal zu verarbeiten und/oder funktechnisch zu kommunizieren. Eine kabelgebundene Kommunikation zwischen Ladestation und Elektrofahrzeug kann durch die CP-Leitung vorgesehen sein. Das Elektronikmodul kann auch ausgebildet sein, diese kabelgebundene Kommunikation zu erfassen. Das Elektronikmodul kann weiter ausgebildet sein, in Abhängigkeit dieser Kommunikation, eine Datenverarbeitung durchzuführen. Zum Beispiel kann das Elektronikmodul ausgebildet sein, beim Vorliegen einer bestimmten Charakteristik in dem durch die CP-Leitung übertragenen Signal, die von der Messeinrichtung bereitgestellten Daten gemäß der durch die Messeinrichtung gemessenen Strommenge zu verarbeiten.

Hierdurch kann eine Zuschaltung bereitgestellt werden, um die verbrauchte Leistung effizient zu bestimmen.

Das Elektronikmodul kann als fester Bestandteil zwischen die CP-Leitung geschaltet sein. Alternativ kann das Elektronikmodul durch Abgriffe an die CP-Leitung kontaktiert sein. Das über die CP-Leitung übertragene Signal kann ein Rechtecksignal sein. Die oben beschriebene Charakteristik kann einer Rechteckform des Rechtecksignals entsprechen. Das Rechtecksignal kann vorzugsweise in einem Spannungsbereich von - 12V bis +12V sein, also eine maximale Schwingungsbreite von 24V aufweisen. Der Spannungsbereich des Rechtecksignals kann sich abhängig vom Ladezustand des Elektrofahrzeugs anpassen. Für die hierin angegebene Spannung kann als Spannungsbezugspunkt einer Schutzleitung (PE) des Ladekabels vorgesehen sein. Die Schutzleitung kann zusammen mit den anderen für das Laden verwendeten Leiter wie Phasen, Neutralleitung, PP-Leitung und/oder CP-Leitung in dem Ladekabel verlaufen bzw. enthalten sein. Das Rechtecksignal kann eine vorbestimmte Pulsweite entsprechend einem entnehmbaren Strom von Ladestation zu Elektrofahrzeug aufweisen. Proportional zu einer höheren Pulsweite kann ein höherer Strom entnommen werden und umgekehrt. Diese Betriebsweise kann als Pulsspannungsbetrieb bezeichnet werden.

In einem Beispiel kann die CP-Leitung der Ladestation bei galvanischer Trennung zwischen Elektrofahrzeug und Ladestation einen festen Spannungswert haben, der der oben angegeben Amplitude, zum Beispiel +12V oder -12V, entsprechen kann. Diese Betriebsweise kann als Konstantspannungsbetrieb bezeichnet werden. Beim Wechsel von dem Konstantspannungsbetrieb gemäß dem festen Spannungswert an der CP-Leitung in einen Pulsspannungsbetrieb gemäß dem Rechtecksignal mit vorbestimmter Pulsweite an der CP-Leitung kann ein Beginn des Ladevorgangs angezeigt werden. Ein Ende des Ladevorgangs kann umgekehrt dadurch angezeigt werden, dass der Pulsspannungsbetrieb gemäß dem Rechtecksignal endet und in den Konstantspannungsbetrieb übergeht. Die Zeitdauer des Ladevorgangs kann durch eine Spanne zwischen dem Beginn und dem Ende des Ladevorgangs definiert sein.

Der Ladevorgang bzw. seine Zeitdauer kann auch so bestimmt sein, dass ein Beginn des Ladevorgangs durch Verbindung beider PP-Leitungsanschlüsse des Steckverbinderpaars angezeigt wird und ein Ende durch ein Trennen eines oder beider PP-Leitungsanschlüsse des Steckverbinderpaars.

Der Zwischenschaltkasten kann eine Batterieaufnahme zum Einsetzen einer Batterie (Primärzelle) oder eine Akkuaufnahme zum Einsetzen eines Akkumulators (Sekundärzelle) enthalten. Im Falle des Akkumulators kann dieser auch fest in der Akkuaufnahme montiert sein. Ferner kann die Batterie bzw. der Akkumulator an bzw. in dem Elektronikmodul verbaut, angeordnet oder integriert sein. Eine Aufladung kann durch einen in dem Ladekabel geführten Leiter und zusätzlich in dem Zwischenschaltkasten angeordneten Spannungsregler erfolgen. Ebenso kann die Batterieaufnahme oder die Akkuaufnahme ein von außen zugängliches Fach sein, in das die Batterie bzw. der Akku einsetzbar ist. Die Batterieaufnahme oder die Akkuaufnahme können direkt und elektrisch mit dem Elektronikmodul verbunden sein, um eine Stromversorgung der darin enthaltenden Schaltungen zu übernehmen. Hierbei kann in Abhängigkeit von einem über die PP-Leitung übertragenen Signal eine Energieversorgung durch die Batterie bzw. den Akkumulator an das Elektronikmodul bereitgestellt werden.

Somit kann, solange keine feste Kontaktierung bzw. Steckung zwischen Ladestation, Ladekabel und Elektrofahrzeug besteht, Strom eingespart werden.

Zum Beispiel kann eine Energieversorgung des Elektronikmoduls, vorzugsweise ausschließlich, durch die Batterie bzw. den Akkumulator erfolgen, wenn keine elektrische Verbindung zwischen dem Ladekabel und der Ladestation und/oder keine elektrische Verbindung zwischen dem Ladekabel und dem Elektrofahrzeug und/oder keine elektrische Verbindung zwischen der Ladestation und dem Elektrofahrzeug besteht. Zum Beispiel kann eine Energieversorgung des Elektronikmoduls, vorzugsweise ausschließlich, durch die Ladestation oder das Elektrofahrzeug erfolgen, wenn eine elektrische Verbindung zwischen dem Ladekabel und der Ladestation und/oder eine elektrische Verbindung zwischen dem Ladekabel und dem Elektrofahrzeug und/oder eine elektrische Verbindung zwischen der Ladestation und dem Elektrofahrzeug besteht.

Mit Hilfe der Batterie bzw. dem Akkumulator können selbst nach Beendigung des Ladevorgangs die Daten von dem Kabel ausgelesen werden. Hierbei kann das Elektronikmodul ausgebildet sein, bei, vorzugsweise ausschließlicher, Energieversorgung durch die Batterie oder den Akkumulator, (nur) die zum Senden der Daten erforderlichen Einheiten, zum Beispiel die Speichereinheit und die Sendeempfangseinheit, zu betreiben bzw. mit Strom zu versorgen.

Hierdurch kann weiter Strom gespart werden. Es kann also ausreichen einen geringen Strom durch die Batterie bzw. den Akkumulator bereitzustellen, der das Elektronikmodul zumindest in Bereitschaft hält. So kann das Elektronikmodul bzw. dessen Sendeempfangseinheit in einem IDLE Mode betrieben werden, solange die Energieversorgung durch die Batterie bzw. den Akkumulator bereitgestellt wird. Im Falle der Anforderung durch die UE kann das Elektronikmodul bzw. dessen Sendeempfangseinheit in einem ACTIVE Mode betrieben werden, zum Beispiel in einem Zeitraum zwischen der Anforderung durch die UE und einer Abschlussnachricht durch das Elektronikmodul an die UE oder durch die UE an das Elektronikmodul. Die Abschlussnachricht kann eine Beendigung des Kommunizierens der Daten anzeigen.

Die Batterie bzw. der Akkumulator kann direkt elektrisch mit der Messeinrichtung verbunden sein. Die Batterie bzw. der Akkumulator können so mit der Messeinrichtung angeordnet sein und/oder zusammenwirken, dass während dem Ladevorgang des Elektrofahrzeugs die Batterie bzw. der Akkumulator aufgeladen wird. Dies kann in direktem Zusammenhang mit dem Öffnen und Schließen eines Schütz in der Ladestation geschehen. Zum Beispiel kann die Batterie bzw. der Akkumulator aufgeladen werden, sobald der Schütz in der Ladestation schließt und während das Elektrofahrzeug aufgeladen wird.

Außerdem kann der Zwischenschaltkasten eine Kommunikationsschnittstelle ausweisen. Die Kommunikationsschnittstelle kann Teil der Sendeempfangseinheit sein und zum Beispiel als Universal Serial Bus (USB)-Schnittstelle ausgebildet sein. Die USB-Schnittstelle könnte eine Miniatur-USB-Schnittstelle sein, zum Beispiel vom Typ C, Mini-USB oder Mirco-USB. Die Kommunikationsschnittstelle kann alternativ oder zusätzlich mit der Batterie bzw. dem Akkumulator verbunden sein. Die Kommunikationsschnittstelle kann dabei ausgebildet sein, die Batterie bzw. den Akkumulator bei entsprechender Energieversorgung von außen aufzuladen. Ebenso können über die Kommunikationsschnittstelle alternativ oder zusätzlich, die Daten ausgelesen werden oder dem Elektronikmodul Firmwareupdates bereitgestellt werden.

Ebenso kann der Zwischenschaltkasten näher an dem einen Steckverbinder des Steckverbinderpaars angeordnet sein als an dem anderen Steckverbinder des Steckverbinderpaars. Hierbei kann eine Dimension, insbesondere Kabellänge, des ersten Kabelabschnitts größer sein als eine Dimension, insbesondere Kabellänge, des dritten Kabelabschnitts oder umgekehrt. Ein Verhältnis beider Dimension kann größer als 2:1, 3:1, 4:1 oder 5:1 sein. Ebenso kann der erste und/oder dritte Kabelabschnitt zumindest teilweise, zum Beispiel größer als 50% des entsprechenden Abschnitts, spiralförmig ausgebildet sein, also eine Spiralform aufweisen.

Der Zwischenschaltkasten kann weiter mit einer Masse (GND) versehen sein. Zum Beispiel kann die Masse mit einer Schutzleitung bzw. Schutzleitungsanschluss des Steckverbinderpaars verbunden sein. Hierbei kann die Schutzleitung bzw. Schutzleitungsanschluss des Steckverbinderpaars die Masse des Ladekabels, also auch des Zwischenschaltkastens, bilden. Die Elemente des Zwischenschaltkastens können zumindest teilweise mit der Schutzleitung bzw. dem Schutzleitungsanschluss des Steckverbinderpaars. So kann der oben genannte Spannungsbezugspunkt die Masse sein.

Ebenso kann ein Fehlerstrom-Schutzschalter in dem Zwischenschaltkasten angeordnet sein. Der Fehlerstrom-Schutzschalter kann Teil der Messeinrichtung oder separat davon angeordnet sein. Der Fehlerstrom-Schutzschalter kann ausgebildet sein, eine Strommenge zumindest eines Teil der für das Laden verwendeten Leiter zu fühlen und beim Überschreiten eines Schwellenwerts die zwischen Ladestation und Elektrofahrzeug hergestellte elektrische Verbindung zu lösen. Der Schwellenwert kann sich auf eine Stromänderung an zumindest einer der für das Laden verwendeten Leiter beziehen. Beispielsweise kann ein Schwellenwert größer als 30mA/ms, 300mA/ms oder 3A/ms sein.

Die oben genannte Aufgabe wird auch durch ein Verfahren zum Betreiben eines elektrischen Ladekabels gelöst. Das Ladekabel kann vorzugsweise wie oben erläutert ausgeführt sein. Das Verfahren umfasst Bereitstellen eines elektrischen Ladekabels. Das Ladekabel hat ein Steckverbinderpaar. Das Ladekabel hat eine elektrisch leitende Kabelverbindung. Die Kabelverbindung verbindet das Steckverbinderpaar. Das Verfahren umfasst Bereitstellen einer elektrischen Verbindung zwischen einer elektrischen Ladestation und einem Elektrofahrzeug durch Verbinden des einen Steckverbinders des Steckverbinderpaars mit der Ladestation und Verbinden des anderen Steckverbinders des Steckverbinderpaars mit dem Elektrofahrzeug. Das Verfahren umfasst Bestromen des Elektrofahrzeugs beim Ladevorgang durch Bereitstellen, durch die Ladestation, eines Stroms, und Übertragen des Stroms, durch das zwischen der Ladestation und dem Elektrofahrzeug verbundene Ladekabel, von der Ladestation an das Elektrofahrzeug. Das Verfahren umfasst Bereitstellen eines Zwischenschaltkastens einschließlich Messeinrichtung und Elektronikmodul zwischen dem Steckverbinderpaar. Das Verfahren umfasst Messen, durch die Messeinrichtung, einer Strommenge entsprechend dem beim Ladevorgang über die Kabelverbindung übertragenen Strom. Das Verfahren umfasst Verarbeiten, durch das Elektronikmodul, von Daten gemäß der gemessenen Strommenge. Das Verfahren umfasst ferner Funktechnisches Kommunizieren, durch das Elektronikmodul, der Daten gemäß der gemessenen Strommenge.

Die oben genannte Aufgabe kann auch durch eine Ladestation gelöst werden. Die Ladestation kann eine CP-Kommunikation für die CP-Leitung und/oder PP-Kommunikation für die PP-Leitung bereitstellen. Hierbei kann eine Steuerung und Signalgebung zum Anzeigen eines Beginns und/oder Endes eines Ladevorgangs durch die Ladestation, insbesondere ausschließlich, erfolgen. Insbesondere wirken das oben beschriebene Ladekabel und die Ladestation zusammen, um das Elektrofahrzeug zu laden. Beispielweise beinhaltet die Ladestation die Steuerfunktion, die den Strom bzw. Stromfluss zwischen dem Steckverbinderpaar des Ladekabels beeinflusst. In einer Alternative oder zusätzlich kann die Steuerfunktion in dem Elektrofahrzeug enthalten sein bzw. durch dieses ausgeführt werden. Dabei kann eine Ladestart-Anforderung von dem Elektrofahrzeug zu der Ladestation oder umgekehrt gesendet werden, insbesondere über die CP-Leitung und/oder PP-Leitung, um den Start des Ladevorgangs bzw. den Ladevorgang zu initiieren. Das Ladekabel kann passiv auf den Ladevorgang wirken. Der Ladevorgang kann somit unabhängig von einer Funktionalität des Ladekabels/Zwischenschaltkastens bzw. von einer in dem Ladekabel/Zwischenschaltkasten vorhandenen Elektronik sein.

Mit anderen Worten betrifft die Erfindung ein Ladekabel zur Verbindung eines elektrischen Fahrzeuges mit einer Ladestation, welches die verbrauchte Menge an Strom misst, speichert und anschließend über eine Wifi/Bluetooth Schnittstelle auslesen lässt. Ein mögliches Anwendungsgebiet kann die Abrechnung von Dienstwagenfahrern sein, welche ihr Fahrzeug zu Hause laden und die entstandenen Kosten dem Unternehmen als Beleg einreichen wollen.

Ein Nachteil im Stand der Technik ist die geringe Flexibilität, da ein Benutzer keine freie Wahl an Wandladestationsmodellen hat, wenn benutzerbezogene Ladedaten, wie Stromverbrauch, in einem gemeinsamen zu einer Gruppe gehörenden Verwaltungssystem ausgewertet und weiterverarbeitet werden sollen.

Ein weiterer Nachteil im Stand der Technik ist, dass die Intelligenz bei bisherigen Lösungsansätzen in der Ladestation sitzt, und somit eine weitere Installation erfordert.

Noch ein weiterer Nachteil im Stand der Technik ist, dass beim Systemwechsel, zum Beispiel, wenn der Benutzer den Dienstanbieter wechselt, und auf ein anderes System umsteigen will, ein Wechsel in ein anderes Cloud-System sehr komplex und ein Kauf einer neuen Wandladestation teuer ist. Somit besteht der Nachteil eines hohen Kostenaufwands.

Außerdem gibt es im Stand der Technik den Nachteil, dass es nicht ohne weiteres möglich ist, eine dem Benutzer gehörende Wandladestation in einem Wohngebäude, zum Beispiel im Falle eines Mehrfamilienhauses, zu installieren.

Ferner besteht ein Nachteil im Stand der Technik, dass durch einen Einsatz von Sim-Karten in den Wandladestationen bis zu 50% der laufenden Kosten auf eine Mobilfunkverbindung abfallen können.

Gemäß einem oder mehreren Aspekten, kann eine Messung der verbrauchten Energie, sowie die Verarbeitung und Kommunikation dieser an ein Endgerät aus einer fest montierten Wandladestation herausgenommen und in ein mobiles Ladekabel eingebaut werden. Zum Beispiel misst das Ladekabel die Energie und funkt die aggregierte Menge via WLAN/Bluetooth an ein verbundenes Endgerät (Smartphone bzw. eine App) zur weiteren Verarbeitung. Ein großer Vorteil kann in der Unabhängigkeit von einer fest montierten Wandladestation bestehen, wodurch ein Benutzer eine freie Modellwahl der Wandladestation hat.

Im Prinzip kann die Funktion aus Benutzersicht einem Mode 3 Ladekabel gleichen, welches als Verbindung zwischen einer Wandladestation und einem Elektrofahrzeug genutzt wird. Das Kabel kann zusätzlich um ein intelligentes Messsystem erweitert sein.

Anders ausgedrückt kann in einem Beispiel ein Dienstwagenfahrer von seinem Arbeitgeber ein solches Ladekabel, vom Erfinder auch Metering Cable genannt, zugeordnet werden. Das Metering Cable wird zur erstmaligen Aktivierung mit einem Endgerät (Smartphone, Tablet, PC) des Mitarbeiters gekoppelt. Die Kopplung geschieht über Bluetooth/Wifi. Bei der Kopplung wird dem Metering Cable ein eindeutiges Endgerät zugeordnet. Das Ziel ist es, bei räumlicher Nähe der zwei Geräte (Metering Cable und Endgerät) immer eine Verbindung zwischen diesen aufzubauen und so Daten übertragen zu können. Die Verknüpfung von mehr als einem Endgerät mit dem Metering Cable ist denkbar. Lädt der Mitarbeiter sein Fahrzeug mit dem Metering Cable, werden die Zählerdaten einzeln oder aggregiert an das Endgerät übermittelt, von wo aus eine weitere Verarbeitung der Ladevorgänge geschehen kann. Die Übermittlung kann entweder automatisiert in Echtzeit oder auch manuell/gesammelt für mehrere Ladevorgänge geschehen. Das Endgerät dient als Benutzerschnittstelle, Recheneinheit und Verbindungspunkt zum Cloud-Server bzw. zur Cloud Software als zentrales Verwaltungssystem, zum Beispiel der oben beschriebenen dedizierten Gruppe. Zusätzlich kann das Endgerät als Sicherheitsfunktion genutzt werden - Das Endgerät dient ähnlich dem Keyless-Go Prinzip als Authentifizierungsmedium, welches sich bei Aktivierung der Funktion während des Starts eines abzurechenden Ladevorgangs in der Nähe des Metering Cable befinden soll.

Noch anders ausgedrückt kann in einem Beispiel ein intelligenter Messzähler, hierin auch Messeinrichtung genannt, bereitgestellt sein, welcher zum Beispiel nach Measuring Instruments Directive (MID) zugelassen ist. Der Messzähler wird mobil als Teil eines Ladekabels verbaut und befindet sich ortsungebunden/mobil zwischen dem Stecker (zur Wandladestation) und der Kupplung (zum Elektrofahrzeug). Der Messzähler kann als fertiges Hutschienengerät, aber auch als Platinenlösung aufgebaut sein. Der Messzähler misst den fliesenden Strom und übermittelt die erfassten Werte an eine Prozessor- und Speichereinheit. Dort werden die Messwerte gespeichert, aber auch für die drahtlose Übermittlung an ein Endgerät verarbeitet. Die verarbeiteten Messwerte werden als Daten gespeichert und/oder an das Endgerät gesendet. Die Messwerte können dabei an einen Zeitstempel geknüpft sein. Die Daten können für die Sendung entsprechend einem Kommunikationsprotokoll codiert und moduliert sein. Zusätzlich kann die CP-Leitung als Kommunikationskanal zwischen Fahrzeug und Wandladestation abgehört werden, um startende und endende Ladevorgänge richtig erkennen zu kennen.

Es ist dem Fachmann klar, dass die hierin dargelegten Erklärungen unter Verwendung von Hardwareschaltungen, Softwaremitteln oder einer Kombination davon implementiert sein/werden können. Die Softwaremittel können im Zusammenhang stehen mit programmierten Mikroprozessoren oder einem allgemeinen Computer, einer ASIC (Englisch: Application Specific Integrated Circuit; zu Deutsch: anwendungsspezifische integrierte Schaltung) und/oder DSPs (Englisch: Digital Signal Processors; zu Deutsch: digitale Signalprozessoren).

Beispielsweise können die Messeinrichtung und das Elektronikmodul, einschließlich Prozessoreinheit, Speichereinheit, Host und Sendeempfangseinheit, teilweise als ein Computer, eine Logikschaltung, ein FPGA (Field Programmable Gate Array; zu Deutsch: im Feld programmierbare Logik-Gatter-Anordnung), ein Prozessor (beispielsweise umfassend einen Mikroprozessor, einen Mikrocontroller (µC) oder einen Vektorprozessor), ein Core (zu Deutsch: Kern, kann in dem Prozessor integriert sein beziehungsweise von dem Prozessor verwendet werden) und/oder eine CPU (Englisch: Central Processing Unit; zu Deutsch: zentrale Prozessoreinheit; wobei mehrere Prozessorkerne möglich sind) realisiert sein.

In weiteren Beispielen können die Messeinrichtung und das Elektronikmodul, einschließlich Prozessoreinheit, Speichereinheit, Host und Sendeempfangseinheit, teilweise als eine FPU (Englisch: Floating Point Unit; zu Deutsch: Gleitkommaprozessoreinheit), eine NPU (Englisch: Numeric Processing Unit; zu Deutsch: Numerische Prozessoreinheit), und/oder eine ALU (Englisch: Arithmetic Logical Unit; zu Deutsch: arithmetisch-logische Einheit) realisiert sein.

In einer noch weiteren beispielhaften Ausgestaltung können die Messeinrichtung und das Elektronikmodul, einschließlich Prozessoreinheit, Speichereinheit, Host und Sendeempfangseinheit, teilweise als ein Koprozessor (zusätzlicher Mikroprozessor zur Unterstützung eines Hauptprozessors (CPU)), eine GPGPU (Englisch: General Purpose Computation on Graphics Processing Unit; zu Deutsch: Allzweck-Berechnung auf Grafikprozessoreinheit(en)), ein Parallelrechner (zum gleichzeitigen Ausführen, unter anderem auf mehreren Hauptprozessoren und/oder Grafikprozessoren, von Rechenoperationen) und/oder ein DSP realisiert sein.

Die Messeinrichtung und das Elektronikmodul, einschließlich Prozessoreinheit, Speichereinheit, Host und Sendeempfangseinheit, sollen hierin allerdings nicht auf das Vorgenannte beschränkt sein.

Auch wenn einige der voranstehend beschriebenen Aspekte in Bezug auf das Ladekabel beschrieben wurden, so können diese Aspekte auch auf das Verfahren oder die Ladestation zutreffen. Genauso können die voranstehend in Bezug auf das Verfahren und die Ladestation beschriebenen Aspekte in entsprechender Weise auf das Ladekabel zutreffen.

Ebenfalls versteht sich, dass die vorliegend verwendeten Begriffe lediglich der Beschreibung einzelner Ausführungsformen dienen und nicht als Einschränkung gelten sollen. Sofern nicht anders definiert, haben alle vorliegend verwendeten technischen und wissenschaftlichen Begriffe die Bedeutung, die dem allgemeinen Verständnis des Fachmannes auf dem für die vorliegende Offenbarung relevanten Fachgebiet entspricht; sie sind weder zu weit noch zu eng zu fassen. Werden vorliegend Fachbegriffe unzutreffend verwendet und bringen so den technischen Gedanken der vorliegenden Offenbarung nicht zum Ausdruck, sind diese durch Fachbegriffe zu ersetzen, die dem Fachmann ein richtiges Verständnis vermitteln. Die vorliegend verwendeten allgemeinen Begriffe sind auf der Grundlage der im Lexikon befindlichen Definition oder dem Zusammenhang entsprechend auszulegen; hierbei ist eine zu enge Auslegung zu vermeiden.

### KURZBESCHREIBUNG DER ZEICHNUNGEN

Die Erfindung wird anhand von Ausführungsformen unter Bezug auf die beigefügten schematischen Figuren mit weiteren Einzelheiten näher erläutert.

In diesen zeigen
- FIG. 1: ein erstes Beispiel eines Ladekabels; und
- FIG. 2: ein zweites Beispiel eines Ladekabels; und
- FIG. 3: ein Verfahren zum Betreiben des Ladekabels.

### DETAILLIERTE BESCHREIBUNG

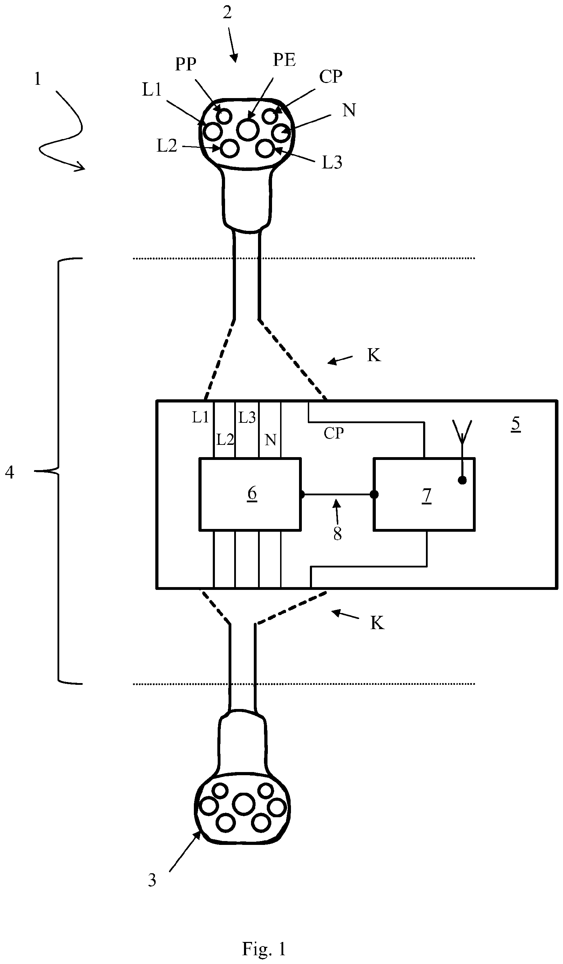

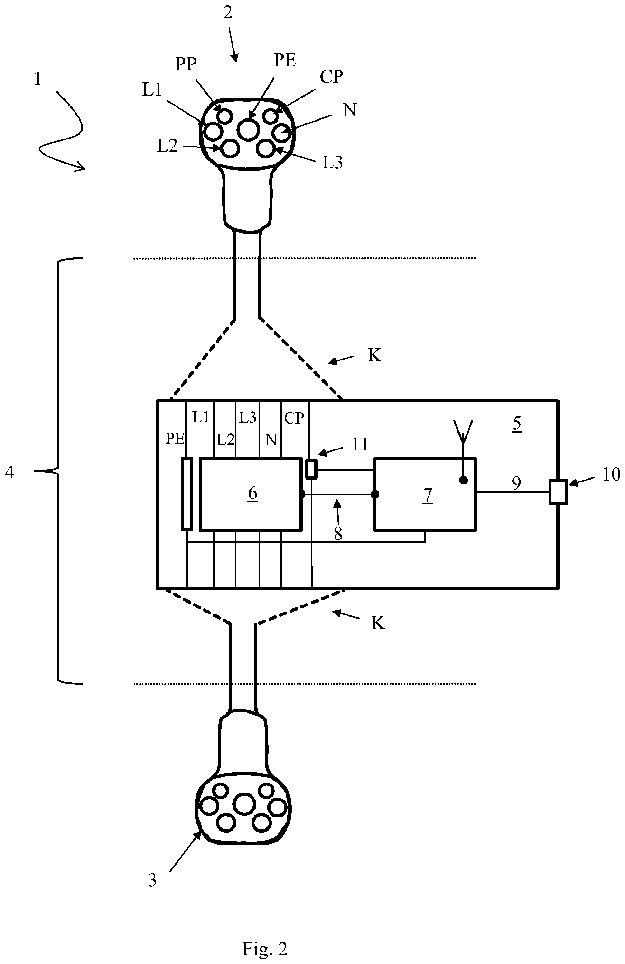

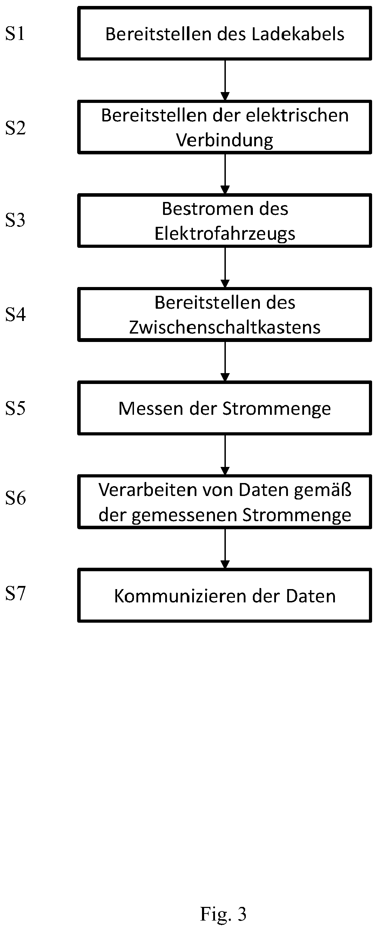

Fig. 1 und 2 zeigen jeweils ein Beispiel für ein Ladekabel 1 mit entsprechenden Komponenten. Fig. 3 zeigt ein dazugehöriges Verfahren, wie das Ladekabel 1 zu verwenden ist. Nachfolgend wird die Erfindung anhand dieser Figuren in anschaulicher spezifischer Weise erläutert.

Das Ladekabel 1 hat einen ersten Steckverbinder und einen zweiten Steckverbinder, die sich in Lade-Art und Stecker-Typ gleichen. Jeder der beiden Steckverbinder 2 und 3, die hierin als Steckverbinderpaar 2, 3 bezeichnet werden, hat Phasenanschlüsse L1, L2 und L3, einen Neutralleitungsanschluss N, einen Schutzleitungsanschluss PE und zwei Steueranschlüsse, speziell einen PP-Leitungsanschluss PP und einen CP-Leitungsanschluss CP. Jeweilige Anschlüsse des ersten Steckverbinders 2 sind mit jeweiligen Anschlüssen des zweiten Steckverbinders 3 verbunden. Hierbei kann die Verbindung bei allen Anschlüssen elektrisch sein, bevorzugt ohne Unterbrechung, und weiter bevorzugt direkt über die jeweiligen Leiter.

Zwischen den Steckverbindern 2 und 3 befindet sich die Kabelverbindung 4, welche neben zwei Kabelabschnitten auch noch einen zwischen die zwei Kabelabschnitte geschalteten Zwischenschaltkasten 5 als weiteren Kabelabschnitt aufweist. Ein Übergangsbereich von den zwei Kabelabschnitten ist als Übergangsbereich K jeweils schematisch gezeigt (oben und unten in Fig. 1 und 2). Der Übergangsbereich K kann als Muffe ausgebildet sein und ermöglicht das einfache Verbinden des Zwischenschaltkastens 5 an die zwei Kabelabschnitte die von den jeweiligen Steckverbindern 2 und 3 wegführen und den Zwischenschaltkasten 5 direkt verbinden.

Die Phasen von den Phasenanschlüssen L1, L2 und L3, die Neutralleitung von dem Neutralleitungsanschluss N, die Schutzleitung von dem Schutzleitungsanschluss PE und die zwei Steuerleitungen, PP-Leitung (nicht gezeigt) von dem PP-Leitungsanschluss PP und CP-Leitung von dem CP-Leitungsanschluss CP, verlaufen von dem einen Steckverbinder 2 zu dem anderen Steckverbinder 3 durch den Zwischenschaltkasten 5 hindurch.

Speziell verlaufen die Phasen von den Phasenanschlüssen L1, L2 und L3, und die Neutralleitung von dem Neutralleitungsanschluss N durch eine Messeinrichtung 6 in dem Zwischenschaltkasten 5.

Die PP-Leitung von dem PP-Leitungsanschluss PP und/oder die CP-Leitung von dem CP-Leitungsanschluss CP können durch das Elektronikmodul 7 verlaufen. Ebenso können die PP-Leitung von dem PP-Leitungsanschluss PP und/oder die CP-Leitung von dem CP-Leitungsanschluss CP unabhängig von der Elektronikmodul 7 durch den Zwischenschaltkasten 5 verlaufen. Hierbei greift das Elektronikmodul 7 über entsprechende Kontaktierungen (zum Beispiel Messfühler 11, wie in Fig. 2 gezeigt) entsprechende Signale von der PP-Leitung von dem PP-Leitungsanschluss PP und/oder der CP-Leitung von dem CP-Leitungsanschluss CP ab.

In Fig. 2 ist die Schutzleitung explizit gezeigt, die den Spannungsbezugspunkt bzw. die Masse des Ladekabels 1 bildet und die beiden Schutzleitungsanschlüsse PE des Steckverbinderpaars 2 und 3 verbindet. Das Elektronikmodul 7 ist hierbei direkt mit der Schutzleitung verbunden. Zusätzlich ist in Fig. 2 eine Schnittstellenverbindung 9 gezeigt, die zu einer Schnittstelle 10 führt, mit der von außerhalb des Zwischenschaltkastens 5 eine Kommunikation und/oder Energieversorgung durchgeführt werden kann. Zum Beispiel ist die Schnittstellenverbindung 9 eine Energieversorgungsleitung und/oder Kommunikationsleitung, und die Schnittstelle 10 eine Energieversorgungschnittstelle und/oder Kommunikationsschnittstelle, wie ein USB-C.

Funktional besteht der Zwischenschaltkasten 5 aus der Messeinrichtung, die mit dem Elektronikmodul 7 über eine elektrische Verbindung 8 gekoppelt ist. Das Elektronikmodul kann eine Prozessoreinheit, eine Speichereinheit, einen Host, die hier nicht gezeigt sind, und eine Sendeempfangseinheit (als kleine Antenne illustriert) enthalten. Die Messeinrichtung 6 als Stromzähler kann zusammen mit dem Elektronikmodul 7 eine funktionale Einheit bilden, mit der eine Stromaufnahmedokumentation einfach und flexibel gestaltet werden kann.

Im Einsatz gemäß dem Verwendungsverfahren, wie in Fig. 3 schematisch gezeigt, kann zuerst in Schritt S1 das elektrische Ladekabel 1 bereitgestellt werden. Danach wird das Ladekabel in Schritt S2 sowohl an die Ladestation als auch an das Elektrofahrzeug angeschlossen. Dann wird der Ladevorgang in Schritt S3 durchgeführt. Der Zwischenschaltkasten 5 ist bereits mit dem Bereitstellen des Ladekabels in Schritt S1 bereitgestellt (S4). Zusammengefasst laufen die Schritte S5 und S6 für den Ladevorgang wie folgt ab. Das Elektronikmodul 7 erfasst über die CP-Leitung ein Signal und verarbeitet in Abhängigkeit davon eine von der Ladestation bereitgestellte und von der Messeinrichtung 6 gemessene Strommenge als Daten. Diese werden in der Speichereinrichtung in dem Elektronikmodul 7 aufbewahrt bis ein Benutzerendgerät, UE, eine Anforderung sendet, die eine Abfrage der Strommenge beinhaltet. Daraufhin sendet das Elektronikmodul 7 in Schritt S7 als Antwort auf die Anforderung ein Signal, das die Daten gemäß der gemessenen Strommenge enthält, in die Umgebung des Zwischenschaltkastens 7.

Über die Schnittstelle 10 kann ein(e) in dem Elektronikmodul 7 enthaltene(r) Akkumulator bzw. Batterie mit Strom versorgt werden und/oder das Elektronikmodul 7 mit Updates versorgt werden. Der Akkumulator bzw. die Batterie wird ansonsten während dem Ladevorgang durch die Ladestation bzw. das Elektrofahrzeug mit Energie versorgt und dient dazu, das Elektronikmodul 7 während einer Zeit, in der kein Ladevorgang stattfindet, mit Energie zu versorgen, um für den Fall, dass die Daten ausgelesen werden sollen, betriebsbereit zu sein.

Folglich wird hierin ein kostengünstiges und flexibles Energieversorgungssystem zur Verfügung gestellt.

An dieser Stelle sei darauf hingewiesen, dass alle oben beschriebenen Teile für sich alleine gesehen und in jeder Kombination, insbesondere die in den Figuren dargestellten Details, als erfindungswesentlich beansprucht werden. Abänderungen hiervon sind dem Fachmann geläufig.

### BEZUGSZEICHENLISTE

- 1: Ladekabel
- 2: erster Steckverbinder
- 3: zweiter Steckverbinder
- 4: Kabelverbindung
- 5: Zwischenschaltkasten
- 6: Messeinrichtung
- 7: Elektronikmodul
- 8: Elektrische Verbindung
- 9: Schnittstellenverbindung
- 10: Schnittstelle
- 11: Messfühler
- K: Kopplungsbereich
- L1, L2, L3: Phasenanschlüsse
- N: Neutralleitungsanschluss
- CP: CP-Leitungsanschluss
- PE: Schutzleitungsanschluss
- PP: PP-Leitungsanschluss

## Patentansprüche

1. Elektrisches Ladekabel (1) zum Verbinden zwischen einer elektrischen Ladestation und einem Elektrofahrzeug, wobei das Ladekabel (1) ein Steckverbinderpaar (2, 3) aufweist, das über eine elektrisch leitende Kabelverbindung (4) verbunden ist, und das Ladekabel (1) beim Ladevorgang ausgebildet ist, Strom von der Ladestation durch den einen Steckverbinder (2) des Steckverbinderpaars (2, 3) über die Kabelverbindung (4) zu dem anderen Steckverbinder (3) des Steckverbinderpaars (2, 3) zu übertragen und an das Elektrofahrzeug abzugeben,
**dadurch gekennzeichnet, dass**
die Kabelverbindung (4) einen Zwischenschaltkasten (5) einschließlich einer Messeinrichtung (6) und eines Elektronikmoduls (7) aufweist, und dass die Messeinrichtung (6) ausgebildet ist, eine Strommenge entsprechend dem beim Ladevorgang über die Kabelverbindung (4) übertragenen Strom zu messen und das Elektronikmodul (7) ausgebildet ist, Daten gemäß der gemessenen Strommenge zu verarbeiten und funktechnisch zu kommunizieren.

2. Elektrisches Ladekabel (1) nach Anspruch 1, **dadurch gekennzeichnet, dass**
der Zwischenschaltkasten (5) keine eigene Steuerfunktion aufweist, die den Strom zwischen dem Steckverbinderpaar (2, 3) beeinflusst.

3. Elektrisches Ladekabel (1) nach Anspruch 1 oder 2, **dadurch gekennzeichnet, dass**
die Daten gemäß der gemessenen Strommenge einen über eine Zeitdauer des Ladevorgangs akkumulierten Stromverbrauch anzeigen.

4. Elektrisches Ladekabel (1) nach einem der vorhergehenden Ansprüche, **dadurch gekennzeichnet, dass**
das Elektronikmodul (7) ausgebildet ist, mit einer in einer Umgebung des Zwischenschaltkastens (5) befindlichen Benutzerausrüstung, UE, funktechnisch zu kommunizieren, und als Antwort auf eine Anforderung, durch die UE, ausgebildet ist, die Daten gemäß der gemessenen Strommenge an die UE funktechnisch zu kommunizieren.

5. Elektrisches Ladekabel (1) nach Anspruch 4, **dadurch gekennzeichnet, dass**
das Elektronikmodul (7) ausgebildet ist, die Daten gemäß der gemessenen Strommenge an die UE, abhängig von einer in dem Elektronikmodul (7) gespeicherten und mit der UE assoziierten Kennung, funktechnisch zu kommunizieren.

6. Elektrisches Ladekabel (1) nach einem der vorhergehenden Ansprüche, **dadurch gekennzeichnet, dass**
der Zwischenschaltkasten (5) eine vor Umwelteinflüssen geschützte Einhausung ist, die aus Kunststoff hergestellt ist.

7. Elektrisches Ladekabel (1) nach einem der vorhergehenden Ansprüche, **dadurch gekennzeichnet, dass**
das Elektronikmodul (7) und die Messeinrichtung (6) elektrisch mittels einer festen oder lösbaren elektrischen Verbindung, vorzugsweise mittels eines Busses (8), verbunden sind.

8. Elektrisches Ladekabel (1) nach einem der vorhergehenden Ansprüche, **dadurch gekennzeichnet, dass**
der eine Steckverbinder (2) des Steckverbinderpaars (2, 3) ein Typ-1-Stecker, Typ-2-Stecker oder Combo-Stecker ist, und dass der andere Steckverbinder (3) des Steckverbinderpaars (2, 3) identisch zu dem einen Steckverbinder (2) des Steckverbinderpaars (2, 3) ist oder dass der andere Steckverbinder (3) des Steckverbinderpaars (2, 3) ein anderer aus einem Typ-1-Stecker, Typ-2-Stecker oder Combo-Stecker ist; und/oder
eine Ladeart des Ladekabels (1) Mode 2, Mode 3 oder Mode 4 entspricht.

9. Elektrisches Ladekabel (1) nach einem der vorhergehenden Ansprüche, **dadurch gekennzeichnet, dass**
das Elektronikmodul (7) an eine Control-Pilot-, CP, Leitung der Kabelverbindung (4) angeschlossen ist, und das Elektronikmodul (7) ausgebildet ist, die Daten gemäß der gemessenen Strommenge basierend auf einem über die CP-Leitung übertragenen Signal zu verarbeiten und/oder funktechnisch zu kommunizieren.

10. Verfahren zum Betreiben eines elektrischen Ladekabels (1), vorzugsweise nach einem der vorhergehenden Ansprüche, das Verfahren umfassend:
Bereitstellen (S1) eines elektrischen Ladekabels (1), das ein Steckverbinderpaar (2, 3) und eine elektrisch leitende Kabelverbindung (4) aufweist, die das Steckverbinderpaar (2, 3) verbindet,
Bereitstellen (S2) einer elektrischen Verbindung zwischen einer elektrischen Ladestation und einem Elektrofahrzeug durch:
Verbinden des einen Steckverbinders (2) des Steckverbinderpaars (2, 3) mit der Ladestation;
Verbinden des anderen Steckverbinders (3) des Steckverbinderpaars (2, 3) mit dem Elektrofahrzeug;
Bestromen (S3) des Elektrofahrzeugs beim Ladevorgang durch:
Bereitstellen, durch die Ladestation, eines Stroms;
Übertragen des Stroms, durch das zwischen der Ladestation und dem Elektrofahrzeug verbundene Ladekabel (1), von der Ladestation an das Elektrofahrzeug,
**gekennzeichnet durch**
Bereitstellen (S4) eines Zwischenschaltkastens (5) einschließlich Messeinrichtung (6) und Elektronikmodul (7) zwischen dem Steckverbinderpaar (2, 3),
Messen (S5), durch die Messeinrichtung (6), einer Strommenge entsprechend dem beim Ladevorgang über die Kabelverbindung (4) übertragenen Strom,
Verarbeiten (S6), durch das Elektronikmodul (7), von Daten gemäß der gemessenen Strommenge, und
Funktechnisches Kommunizieren (S7), durch das Elektronikmodul (7), der Daten gemäß der gemessenen Strommenge.
